# EUROPEAN PATENT SPECIFICATION

(11) **EP 0 583 321 B1**
(45) Date of publication and mention of the grant of the patent: **12.03.1997**
(21) Application number: 92909767.3
(22) Date of filing: 29.04.1992
(51) Int. Cl.: E01C 23/16

(54) **A VEHICLE FOR THE MEASURING AND MARKING OF POINTS AND/OR LINES ON A ROAD**
FAHRZEUG ZUM VERMESSEN UND MARKIEREN VON PUNKTEN UND/ODER LINIEN AUF EINER STRASSE
VEHICULE DESTINE A LA MESURE ET AU MARQUAGE DE POINTS ET/OU DE LIGNES SUR LA ROUTE

(30) Priority: 29.04.1991 DE 9105281 U; 02.09.1991 DE 9110846 U
(43) Date of publication of application: 23.02.1994
(73) Proprietor: NIELSEN, Bent Johannes, DK-5672 Broby (DK)
(72) Inventor: NIELSEN, Bent Johannes, DK-5672 Broby (DK)
(74) Representative: Holme, Edvard
(86) International application number: DK9200136
(87) International publication number: WO9219811

(56) References cited:
- WO-A-90/12922
- FR-A- 2 609 068
- US-A- 3 101 175
- US-A- 3 882 268
- US-A- 4 167 592

## Description

The invention relates to a vehicle for the measuring and marking of points and/or lines on a road, said vehicle comprising a roof on which there is mounted a holder with two cameras which are forwardly directed in the direction of travel and which via a mixer are connected to a common monitor, and with a marking nozzle disposed on the vehicle for the application of the marking agent on the road.

Such vehicles and arrangements are known, for example from DE-A-23 32 779. The known arrangement is placed on the roof of the vehicle and has two cameras mounted on a mast on one side of the vehicle, these cameras being directed towards the edges of the road which extend along the side of the vehicle. The measuring is effected by driving the vehicle while displaying the two halves of the breadth of the road on two screens or one double screen image. During this movement, a marking nozzle which is mounted on the vehicle is conveyed along the centre of the road, and during the movement the point marking is effected at certain intervals, after which the marking lines can be applied by means of a line-marking machine.

Such known marking vehicles suffer the disadvantage that the observed road image is relatively short, which makes it difficult to steer the vehicle in a precise manner when, for example, turnoffs, parking areas and similar interruptions in the roadside are encountered. In such cases, the only thing that can be done is to try and steer the vehicle in such a manner that a correct point-marking is achieved. Moreover, the cameras are disposed asymmetrically in relation to the vehicle, the result being that when the vehicle turns, the turning-path of the cameras deviates from that of the vehicle, whereby the position of the cameras in relation to the roadway is displaced and makes it difficult to achieve accuracy in the marking.

From FR-A-2,609,068 there is known a similar marking vehicle which has a housing mounted directly on the roof, and wherein two cameras are placed one above the other. The roadway is hereby displayed two times on a horizontally-divided screen on a monitor, and when the roadway images are identical, a marking nozzle disposed centrally behind the vehicle is positioned immediately over the centre of the road. However, this arrangement can be used only for straight, i.e. uninterrupted, roadsides, in that the vehicle is guided by the actual roadside. Also in this case, irregularities such as turnoffs result in disruptions in the scanning of the roadside. Consequently, no correct basis is provided for the steering of the marking vehicle, and thus neither for the marking.

Finally, from DE-A-28 23 324 there is known a marking vehicle which has a camera mounted on each side of the vehicle. The two sides of the road are displayed in a horizontally extending manner on a vertically-divided screen, and when the two roadsides extend at the same level on the screen, the nozzle on the vehicle lies over the centre of the road.

Also in this case, however, uncertainty arises in the marking, for example when the vehicle is driven along a road with uneven roadsides, turnoffs and the like. In such cases, one or both of the roadsides will disappear from or be displaced on the screen, whereby the vehicle must be steered following an assessment of the course of the road.

Some help is available here by observing an overlying picture of the road seen through a camera mounted centrally on the vehicle, but since there is no direct relationship between the three picture sections on the screen, great inaccuracies can arise during the measurement of roads which have sides which run such unequal courses.

It is the object of the invention to overcome these drawbacks in order to ensure correct steering of the vehicle and herewith correct marking of the road, even though the roadside which serves as orientation on the road is interrupted or extends in an uneven manner.

This object is achieved with a vehicle as defined in claim 1.

By means of this configuration of the vehicle and the measurement and marking arrangement related herewith, and with the two cameras which are preferably disposed with their vertical axes in the vertical plane in which the marking nozzle also lies, there is achieved the advantage that larger stretches of the roadside can be shown on the monitor, in that the possibility exists of adjusting the cameras in accordance with the requirements, so that the orientation is not lost even though there are breaks or deviations in the roadside.

Depending on the amount of marking agent the vehicle can accommodate, it is able not only to carry out point marking but also line marking both on the middle and along the edge of the road.

As disclosed in claim 2, mounting the cameras by means of pivotable brackets enables the cameras to be adjusted easily by means of the bracket.

As disclosed in claim 3, with the cameras being adjustable in height from inside the vehicle, the height of the cameras and herewith the display picture can be adjusted in accordance with the breadth of the road, so that by means of this adjustment it is possible to mark roads with variable breadths in a continuous manner.

As disclosed in claim 4, by placing the cameras vertically over the marking nozzle, the marking itself can be effected while the vehicle is being driven around bends or curves, in that the path of movement of the cameras becomes common with that of the nozzle.

As disclosed in claim 5, by dividing the monitor picture into two fields with a vertical centreline between each camera picture, an adjustment of the cameras will make it possible for the roadside to run parallel with the centreline, which provides a hitherto unknown good possibility of surveillance and herewith facilitation of the steering while driving the vehicle.

As disclosed in claim 6, by providing the screen picture with mutually parallel vertical guidelines, it is possible to guide the vehicle in a hitherto unknown easy manner following the positioning of the road lines in relation to the guidelines.

Finally, as disclosed in claim 7, it is expedient to provide the cameras with servo control in the form of motors or the like, which can be operated from inside the vehicle.

In the following, a preferred embodiment example will be described in more detail with reference to the drawing, where
- Fig. 1: shows a vehicle with equipment mounted and seen from the front,
- fig. 2: shows the vehicle seen from the side,
- fig. 3: shows the vehicle during the marking of a roadway seen from above,
- fig. 4: shows the division of the screen picture,
- fig. 5: shows the screen picture during the marking, and
- fig. 6: shows in schematic form the adjustment possibilities of the cameras.

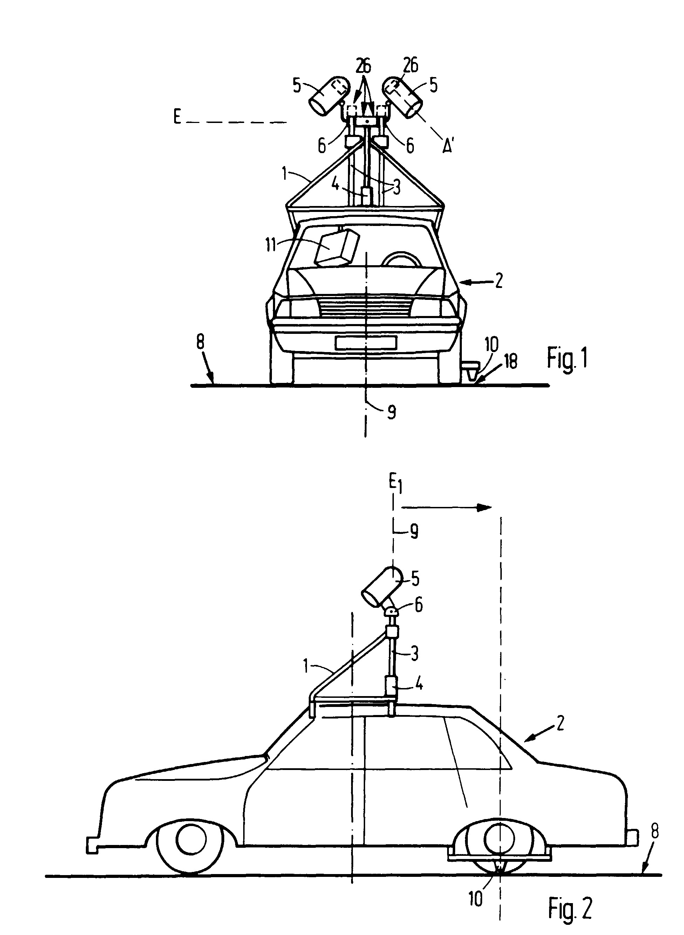

As shown in figs. 1 and 2, the measuring arrangement comprises a holder 1 secured to the roof of a vehicle 2, said holder 1 being in the form of a frame on which there is mounted a column 3 which, by means of a suitable actuator 4 such as an electrical motor or the like, can be raised and lowered.

By means of an adjustable bracket 6, on the column 3 there are mounted two cameras 5 which can be turned in three directions, i.e. in a horizontal plane E, around the vertical axis and finally around the camera axis A', thus making it possible to achieve vertical images of the roadside 12 on the screen 11' of a monitor 11 mounted in the vehicle, parallel with the guidelines 22, as will be described below.

Moreover, the cameras 5 are disposed immediately at the side of the centre plane of the vehicle 2, and in the shown embodiment example at the vehicle's vertical axis of rotation 9. During movement of the vehicle 2, the cameras 5 thus remain in the vehicle's path, in that they lie in or close to the centre of this movement and thus follow the vehicle, corresponding to the vehicle's actual position on the road, which is hereby reproduced correctly.

On the vehicle 2, in the area of the rear wheel, there is also a nozzle 10 which is provided with not-shown equipment for the supply of marking liquid.

In a second embodiment, the cameras 5 can be mounted in the centre, vertically over the rear axle, i.e. in the same vertical plane as that in which the marking nozzle 10 is disposed, which is indicated by a stippled line in fig. 2. Since any change in the steering will cause this area of disposition to adjust accordingly, a more even marking during the pivoting is obtained in that adjustment is made for a change of direction.

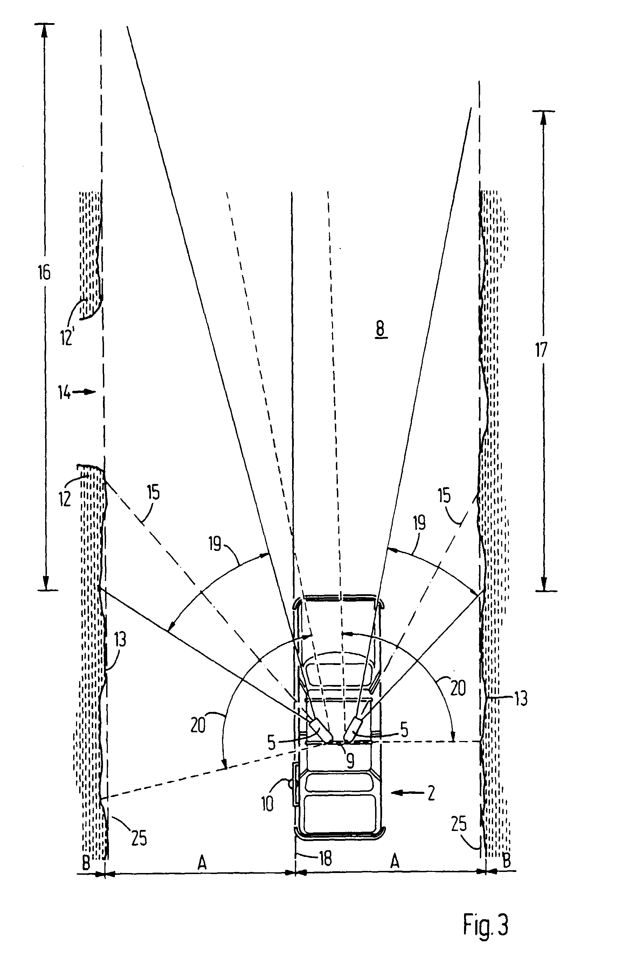

Fig. 3 shows a section of a road with wayside 12 to be marked on both sides. As shown, the edge 13 may describe a course which is not quite straight. A turnoff 14 is moreover shown, i.e. an interrupted wayside, as indicated on the left in the drawing.

The left-hand camera 5 is adjusted so that the camera angle 19 begins at the foremost end of the vehicle and extends along the left-hand wayside over a picture length 16 of approx. 13 m. It should be noted that the camera 5 also shows the wayside 12' on the other side of the turnoff. The right-hand camera 5 is adjusted so that the picture angle 19 begins at the foremost end of the vehicle and extends along the right-hand wayside over a distance 17 of approx. 11.5 m.

As shown in fig. 3, other picture angles 20 can be chosen, whereby the stretch of wayside displayed can be longer, and the possibility of orientation over a longer distance is increased. However, this is effected at the cost of the precision.

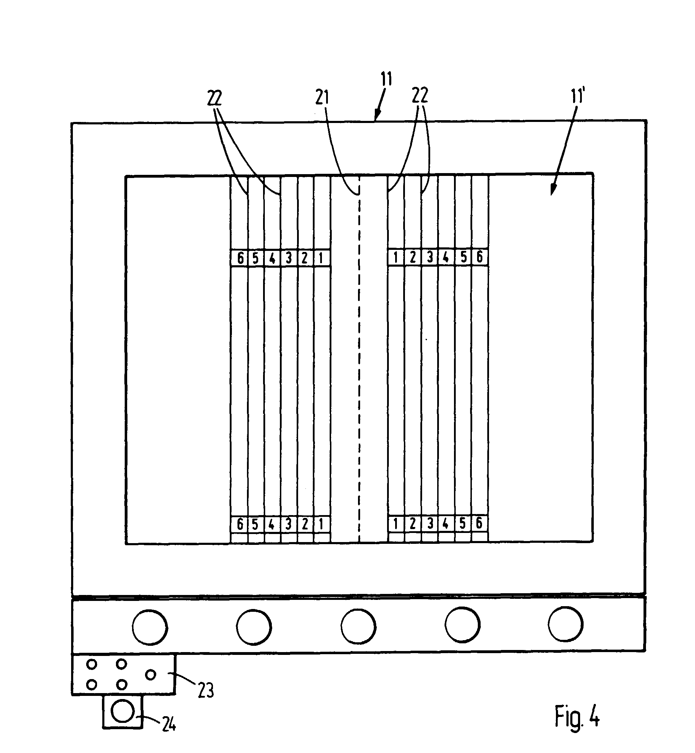

Inside the vehicle 2 there is mounted a monitor 11, as shown in fig. 4, the screen 11' of which can be observed by the driver while driving. This has a vertical centreline 21, on both sides of which and running parallel are guidelines 22, marked with the figures 1-6 on both sides of the centreline 21, which by means of a screen splitter 23 can be placed on the monitor at the desired distance. The split-line thus corresponds to the centreline 21. The vehicle can hereby be positioned so that the nozzle 10 lies exactly over the centreline 18 of the road to be marked.

Moreover, on the screen splitter 23 there is a switch 24 for the activation of the actuator 4, whereby the cameras 5 can be raised or lowered as required. By raising of the cameras 5 with fixed picture angle, the view is increased, i.e. there is hereby displayed a "deeper" picture of the wayside.

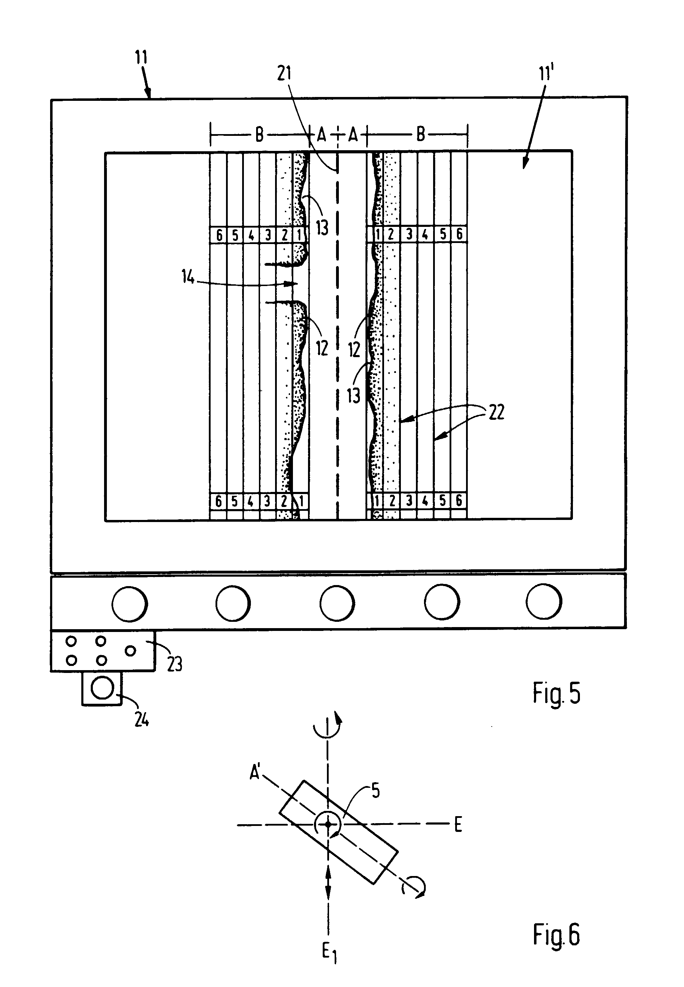

Fig. 5 shows a picture on the monitor 11 of a stretch of the roadway with waysides 13 as seen by the driver while driving the vehicle. The centreline 21 coincides with the O-line of the monitor, and the waysides 12 are seen between the guidelines 22, chiefly in the two innermost guideline fields 1. The vehicle, oriented in accordance with the innermost lines 22, which extend in the theoretical, throughgoing sideline 25 of the wayside, can thus be precisely steered, as shown in fig. 3.

On the screen of the monitor it is also clearly seen how the waysides 12 extend on the other side of the turnoff 14, whereby it is easy to steer past the turnoff 14 and maintain the nozzle 10 exactly in the middle 18 of the road.

It is also seen that the road breadth A+A is displayed precisely between the innermost guidelines 22, while the waysides B and B substantially and in the shown example are displayed between the innermost guidelines 22 in each picture field, as shown in fig. 5.

By raising or lowering the column 3 and herewith the cameras 5 by operation of the switch 24, the picture can be adjusted as mentioned in accordance with the actual breadth of the road. This makes the road-marking work easier, and it is ensured that interruptions in the wayside do not have a negative influence on the correct implementation of the marking.

It is necessary for the cameras 5 to be mounted in a rotatable manner around their optical axes, hereby ensuring vertical reproduction on the monitor of the transferred wayside images in all camera positions. The adjustment possibilities of both cameras are shown with arrows in fig. 6.

The operation of the vehicle and the arrangement takes place as follows:
i The vehicle 2 is placed on the right-hand side of the road with the nozzle 10 just over a measured point in the middle of the road 18 and parallel with the verges, as shown in fig. 3.
ii The cameras 5 are adjusted with the axes 15 directed forwardly towards the edges of the road with a picture length of approx. 13 and 11.5 m respectively for the left-hand and right-hand camera 5.
iii The screen 11' is divided into two pictures by means of the screen splitter 23 so that the central splitter-line coincides with the O-line of the scale whereby the fixed guidelines 22 with the number scale (1-6) and possible colour fields are placed symmetrically with the O-line on the screen 11'.
iv The height of the cameras 5 is then adjusted so that the edges 13 of the road can be seen to be in line with and substantially parallel to the two guidelines 22 nearest to the O-line 21 on the monitor.
v Hereafter, both road breadths A+A ad the middle 18 of the road are determined and the point marking can commence.
vi The vehicle can be put in motion, and when the edge lines B and road breadth A-A during this movement are held symmetrically on the screen, a perfectly-placed and continuously progressive marking of the middle 18 of the road will take place.
vii At places where the breadth of the road changes, the cameras 5 are raised or lowered so that the screen picture is maintained unchanged.

In order for the television cameras 5 to be adjusted to the desired direction from a small (not-shown) switch panel inside the vehicle, the cameras and their pivot brackets 6 are with an advantageous embodiment, as indicated in fig. 1, provided with small servomotors 26.

## Claims

1. Vehicle for the measuring and marking of points and/or lines on a road, said vehicle (2) having a roof on which there is mounted a holder (1) with two cameras (5) which are forwardly directed in the direction of travel and which via a mixer are connected with a common monitor (11), and with a marking nozzle (10) being disposed on the vehicle for the application of marking agent on the road, **characterized** in that means (26) are provided to pivot each camera (5) around its horizontal axis being located in a horizontal plane (E), around its vertical axis and around its optical axis (A'), and in that means (4) are provided to raise or lower the cameras (5) in a vertical direction.

2. Vehicle according to claim 1, **characterized** in that the cameras (5) are secured to the holder (1) with pivotable brackets (6).

3. Vehicle according to claim 1 or 2, **characterized** in that the cameras (5) or their pivotable brackets (6) are mounted on the holder (1), which is of frame-like configuration, by means of vertically adjustable columns (3) which are provided with a controllable actuator (4) which can be operated from inside the vehicle (2).

4. Vehicle according to any of the claims 1-3, **characterized** in that the cameras (5) with their vertical axes are mounted in a vertical plane in which the marking nozzle (10) is also disposed.

5. Vehicle according to any of the claims 1-4, **characterized** in that the screen picture (11') of the monitor (11) is divided into two fields which extend on each side of a vertical centreline (21), so that each camera (5) has its own field.

6. Vehicle according to claim 5, **characterized** in that both fields of the screen picture (11') on the monitor (11) are provided with guidelines (22) which extend parallel with and next to the centreline (21).

7. Vehicle according to any of the claims 1-6, **characterized** in that the cameras (5) and/or the pivotable brackets (6) are provided with servomotors (26) for the swivelling of the cameras (5).

## Patentansprüche

1. Fahrzug (2) zum Einmessen und zur Punkt- und/oder Linienmarkierung für Fahrbahnen, mit einer auf dem Dach des Fahrzeugs angeordneten Halterung (1) mit zwei in der Fahrtrichtung nach vorn gerichteten und über einen Mixer mit einem gemeinsamen Monitor (11) verbundenen Kameras (5); sowie mit einer am Fahrzeug angeordneten Makierdüse (10) zum Auftragen eines Markiermittels auf die Fahrbahn, **dadurch gekennzeichnet**, dass Mittel (26) zum Drehen jeder Kamera (5) um deren horizontale Achse in einer horizontalen Ebene (E) und um die optische Kameraachse (A') sowie Mittel (4) zum Anheben oder Absenken der Kameras (5) in senkrechter Richtung vorgesehen sind.

2. Fahrzeug nach Anspruch 1, **dadurch gekennzeichnet**, dass die Kameras mittels Schwenkkonsolen (6) an der Halterung (1) befestigt sind.

3. Fahrzeug nach Anspruch 1 oder 2, **dadurch gekennzeichnet**, dass die Kameras (5) oder deren Schwenkkonsolen (6) an einer rahmenförmigen Halterung (1) mit Hilfe von senkrecht einstellbaren, säulenförmigen Hubvorrichtungen (3) mit steuerbarem Hubantrieb montiert sind, der vom Fahrzeuginnern aus betätigt werden kann.

4. Fahrzeug nach einem der Ansprüche 1-3, **dadurch gekennzeichnet**, dass die Kameras (5) mit ihren vertikalen Achsen in einer vertikalen Ebene montiert sind, in der auch die Makierdüse (10) angeordnet ist.

5. Fahrzeug nach einem der Ansprüche 1-4, **dadurch gekennzeichnet**, dass die Bildfläche (11') des Monitors (11) in zwei sich jeweils einer Seite einer vertikalen Mittellinie (21) erstreckende Felder aufgeteilt ist, sodass jede Kamera (5) ihr eigenes Feld hat.

6. Fahrzeug nach Anspruch 5, **dadurch gekennzeichnet**, dass beide Felder der Bildfläche (11') des Monitors (11) mit sich nahe bei der Mittellinie (21) und parallel zu dieser erstreckenden Führungslinien (22) versehen sind.

7. Fahrzeug nach einem der Ansprüche 1-6, **dadurch gekennzeichnet**, dass die Kameras (5) und/oder die Schwenkbaren Konsolen (6) mit Servomotoren (26) zum Schwenken der Kameras versehen sind.

## Revendications

1. Véhicule pour la mesure et le marquage de points et/ou de lignes sur une route, ledit véhicule (2) ayant un toit sur lequel est monté un support (1) muni de deux appareils de prise de vues (5) qui sont dirigés vers l'avant dans la direction de déplacement et qui, par l'intermédiaire d'un mélangeur, sont reliés à un moniteur (11) commun, une buse (10) de marquage étant disposé sur le véhicule pour l'application d'un agent de marquage sur la route, caractérisé en ce que des moyens (26) sont prévus pour pivoter chaque appareil de prise de vues (5) autour de son axe horizontal disposé dans un plan horizontal (E), autour de son axe vertical et autour de son axe optique (A'), et en ce que des moyens (4) sont prévus pour élever ou abaisser les appareils de prise de vues (5) en direction verticale.

2. Véhicule selon la revendication 1, caractérisé en ce que les appareils de prise de vues (5) sont fixés au support (1) par des consoles (6) pivotables.

3. Véhicule selon la revendication 1 ou 2, caractérisé en ce que les appareils de prise de vues (5) ou leurs consoles (6) pivotables sont montés sur le support (1), qui présente une structure du type bâti, au moyen de colonnes (3) ajustables verticalement qui sont munies d'un actionneur adapté pour être commandé, qui peut être mis en action depuis l'intérieur du véhicule (2).

4. Véhicule selon l'une des revendications 1 à 3, caractérisé en ce que les appareils de prise de vues (5) avec leur axe vertical sont montés dans un plan vertical dans lequel la buse (10) de marquage est également disposée.

5. Véhicule selon l'une des revendications 1 à 4, caractérisé en ce que l'image (11') d'écran du moniteur (11) est divisée en deux champs qui s'étendent de chaque côté d'une ligne centrale (21) verticale, de sorte que chaque appareil de prise de vues (5) possède son propre champ.

6. Véhicule selon la revendication 5, caractérisé en ce que les deux champs de l'image (11') d'écran du moniteur (11) sont munis de lignes directrices (22) qui s'étendent parallèlement et au voisinage de la ligne centrale (21).

7. Véhicule selon l'une des revendications 1 à 6, caractérisé en ce que les appareils (5) de prise de vue et/ou les consoles (6) pivotables sont munies de servomoteurs (26) pour pivoter les appareils (5) de prise de vue.
